# EUROPÄISCHE PATENTSCHRIFT

(11) **EP 0 814 247 B1**
(45) Veröffentlichungstag und Bekanntmachung des Hinweises auf die Patenterteilung: **18.01.2006**
(21) Anmeldenummer: 97108672.3
(22) Anmeldetag: 30.05.1997
(51) Int. Cl.: F02D 41/02, F02D 41/34

(54) **Drehzahlsignalausgabe**
Production of rotation speed signal
Elaboration de signal de vitesse de révolution

(30) Priorität: 18.06.1996 DE 19624194
(43) Veröffentlichungstag der Anmeldung: 29.12.1997
(73) Patentinhaber: ROBERT BOSCH GMBH, 70442 Stuttgart (DE)
(72) Erfinder: Ott, Karl, 71706 Markgroeningen (DE); Walter, Klaus, 74321 Bietigheim-Bissingen (DE)

(56) Entgegenhaltungen:
- EP-A- 0 145 935
- DE-A- 3 123 002
- US-A- 4 468 617
- US-A- 5 201 296
- US-A- 5 264 844

## Beschreibung

Die Erfindung betrifft ein Steuergerät für Motoren mit einer Welle, insbesondere Verbrennungsmotoren, mit wenigstens einem ersten Eingang, an dem ein von einem mit der Welle in Verbindung stehenden Impulsgeber erzeugtes erstes Signal angelegt wird, mit einer zentralen Steuereinheit und mit wenigstens einem Ausgang, an dem ein drehzahlabhängiges zweites Signal ausgegeben wird.

Ein derartiges Steuergerät ist beispielsweise aus "Bosch: Technische Unterrichtung - Kombiniertes Zünd- und Benzineinspritzsystem mit Lambda-Regelung; Motronic - " bekannt. Das bekannte Steuergerät arbeitet auf der Basis eines Mikrocomputers. In das Steuergerät werden neben einem als Folge von Spannungsimpulsen vorhandenen Drehzahlsignal noch weitere Signale beispielsweise bezüglich der Stellung der Kurbelwelle, der Luftmenge, der Lufttemperatur oder Motortemperatur eingegeben. Die Impulse des Drehzahlsignals werden in Größe und Form so angepaßt, daß sie von dem Mikrocomputer verarbeitet werden können.

Der Mikrocomputer errechnet aus der Spannungsimpulsfolge des Drehzahlsignals sowie der Kurbeiwellenstellung den aktuellen Wert der Drehzahl des Motors. Aus dem aktuellen Drehzahlwert werden Signale beispielsweise für die Zündung oder die Einspritzventile des Motors abgeleitet.

Des weiteren wird im Steuergerät aus den Spannungsimpulsen des Drehzahlsignals beziehungsweise der Kurbelwellenstellung ein drehzahlabhängiges Signal gebildet, welches anderen Elementen in der Motorumgebung, wie beispielsweise Anzeigeelementen oder einer Getriebesteuerung zur Verfügung gestellt wird. Dieses Signal wird direkt aus der Impulsfolge des Drehzahlsignals abgeleitet. Die Ableitung geschieht derart, daß jeweils zwischen zwei Segmentgrenzen ein vollständiger Rechteckimpuls gebildet wird. Da die Anzahl der Segmente zylinderzahlabhängig ist, ist das betreffende ausgegebene Drehzahlsignal ebenfalls zylinderzahlabhän gig. Denn beispielsweise werden bei einem 4-Zylindermotor bei einem aus zwei Kurbelwellenumdrehungen bestehenden Motorzyklus vier vollständige Rechteckschwingungen ausgegeben, wohingegen bei einem 6-Zylindermotor sechs vollständige Rechteckschwingungen ausgegeben werden.

Die zylinderzahlabhängige Drehzahlausgabe ist sehr nachteilig, da die das Signal verarbeitenden Folgegeräte jeweils entsprechend angepaßt sein müssen. Es können daher entsprechend der Zylinderzahl für jeden Motortyp nur bestimmte Geräte verwendet werden. Entsprechend umfangreich muß die Lagerhaltung sein.

Da das ausgegebene drehzahlabhängige Signal direkt mit den Segmentgrenzen verknüpft ist, steckt die Drehzahlinformation in der Frequenz des ausgegebenen Signals. Je nach Motortyp kann die Frequenz bis zu mehreren 100 Hz betragen. Da bei langsamer Drehzahl die Frequenz einen sehr niedrigen Wert hat beziehungsweise bei Stillstand des Motors keine Impulse übertragen werden, ist die Bandbreite des ausgegebenen drehzahlabhängigen Signals entsprechend groß. Dies bringt Nachteile bei der Verarbeitung des Drehzahlsignals mit sich.

Darüber hinaus läßt sich bei dem von dem bekannten Steuergerät ausgegebenen drehzahlabhängigen Signal nicht unterscheiden, ob sich der Motor im Stillstand befindet oder ob ein Defekt, wie beispielsweise ein Kabelbruch, vorliegt. Dies ist ebenfalls sehr nachteilig.

In der EP 145 935 A wird eine Vorrichtung offenbart, bei der ein Frequenzsignal durch einen Zähler direkt in ein digitales Datenwort umgewandelt wird. Eine weitere Umsetzung in ein Frequenzsignal erfolgt nicht. Weiterhin wird ein ursprüngliches erstes Frequenzsignal durch einen Pulsweitenmodulator durch Vergleich mit einer Abtastfrequenz (vom Generator) direkt in ein Pulsweitensignal umgesetzt. Es handelt sich somit um eine direkte synchrone Umsetzung, bei der eine direkte Kopplung zwischen der Frequenz des Eingangssignals und der Frequenz des Ausgangssignals besteht.

Aus der DE 31 23 002 A ist eine Schaltung bekannt, bei der ebenfalls ein Frequenzsignal erzeugt wird, indem Winkelmarken an einem Pulsgeber vorbeibewegt werden. Diese Frequenzsignale werden dann aber durch einen Frequenzspannungsumsetzer in eine Spannung umgesetzt und mit einer weiteren Spannung verglichen. Das Ausgangssignal ist dann ein Spannungssignal und kein Frequenzsignal. Das Ausgangssignal ist somit weder ein pulsweitenmoduliertes, noch ein frequenz moduliertes Signal.

Es ist Aufgabe der Erfindung, ein eingangs genanntes Steuergerät derart auszubilden, daß es ein zylinderzahlunabhängiges drehzahlabhängiges. Signal ausgibt.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung erfolgt die Erzeugung des drehzahlabhängigen zweiten Signals nicht synchron zum ersten Signal, sondem asynchron. Durch die Auftrennung der direkten Kopplung des zweiten Signals mit dem ersten Signal, läßt sich das zweite Signal unabhängig von der Zylinderzahl des Motors erzeugen. Da der Mikrocomputer des Steuergeräts ohnehin für andere Zwecke den aktuellen Drehzahlwert errechnet, kann in vorteilhafter Weise dieser Wert zur Erzeugung des zweiten Signals verwendet werden. In besonders vorteilhafter Weise kann zur Erzeugung des zweiten Signals eine Vorrichtung zur Erzeugung eines pulsweitenmodulierten Signals verwendet werden. Da Bausteine zur Erzeugung von pulsweitenmodulierten Signalen in vielfältiger Weise im Stand der Technik vorhanden sind, kann zur Erzeugung des pulsweitenmodulierten Signals auf einen Standardbaustein zurückgegriffen werden. Dies wirkt sich besonders günstig im Hinblick auf die Kosten aus.

Dadurch, daß das zweite Signal als pulsweitenmoduliertes Signal vorliegt, lassen sich nachfolgende Baugruppen sehr einfach ausbilden. Da die Information bei einem pulsweitenmodulierten Signal im Tastverhältnis und nicht in der Frequenz steckt, ist die Frequenz des zweiten Signals konstant. Die Eingangskreise von Peripheriegeräten lassen sich daher für eine bestimmte, feste Frequenz auslegen.

Die Auswertung des pulsweitenmodulierten zweiten Signals läßt sich beispielsweise auf besonders einfache Weise mittels eines Integrators realisieren. Der Integrator summiert die Flächeninhalte beispielsweise der positiven Halbwellen auf. Stellt sich aufgrund einer hohen Motordrehzahl ein Tastverhältnis ein, bei dem beim zweiten Signal die positive Halbwelle überwiegt, bildet der Integrator einen entsprechend hohen Wert. Ist das Tastverhältnis aufgrund einer niedrigen Motordrehzahl so, daß das zweite Signal überwiegend keine positive Halbwelle aufweist, ist der Integratorwert entsprechend gering.

Das Steuergerät kann jedoch auch eine Vorrichtung aufweisen, mittels der das zweite Signal als frequenzmoduliertes Signal erzeugt wird, wenn dies zweckmäßig sein sollte. Wenngleich ein derartiges Signal auch nicht mehr den Vorteil bietet, daß die Eingangskreise der nachfolgenden Geräte für eine feste Frequenz ausgelegt sein können, so hat die betreffende Ausführungsform des Steuergeräts jedoch in gleicher Weise wie die erstgenannte Ausführungsform des Steuergeräts den Vorteil, daß der Mikrocomputer des Steuergeräts nicht mit der Erzeugung des zweiten Signals belastet ist. Hierdurch läßt sich der Mikrocomputer effektiver für andere Aufgaben einsetzen.

Darüber hinaus ist es bei einem erfindungsgemäßen Steuergerät möglich, das zweite Signal einer Plausibilitätsprüfung zu unterziehen. So kann insbesondere vereinbart werden, daß dem Stillstand des Motors, das heißt bei der Drehzahl Null, beim pulsweitenmodulierten Signal ein Tastverhältnis von beispielsweise 0,05 und bei der Maximaldrehzahl ein Tastverhältnis von 0,95 eingestellt ist. In gleicher Weise kann beim frequenzmodulierten Signal bei der Drehzahl Null eine Minimalfrequenz und bei der Maximaldrehzahl eine Maximalfrequenz vereinbart werden. Nimmt das zweite Signal Werte an, die außerhalb der vereinbarten Werte liegen, kann eine Fehleranzeige aktiviert werden.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: ein Blockschaltbild eines erfindungsgemäßen Steuergeräts in schematischer Anordnung,
- Fig. 2: ein frequenzmoduliertes zweites Signal entsprechend einer ersten Drehzahl,
- Fig. 3: ein frequenzmoduliertes zweites Signal entsprechend einer zweiten Drehzahl,
- Fig. 4: ein pulsweitenmoduliertes zweites Signal entsprechend der ersten Drehzahl, und
- Fig. 5: ein pulsweitenm oduliertes zweites Signal entsprechend der zweiten Drehzahl.

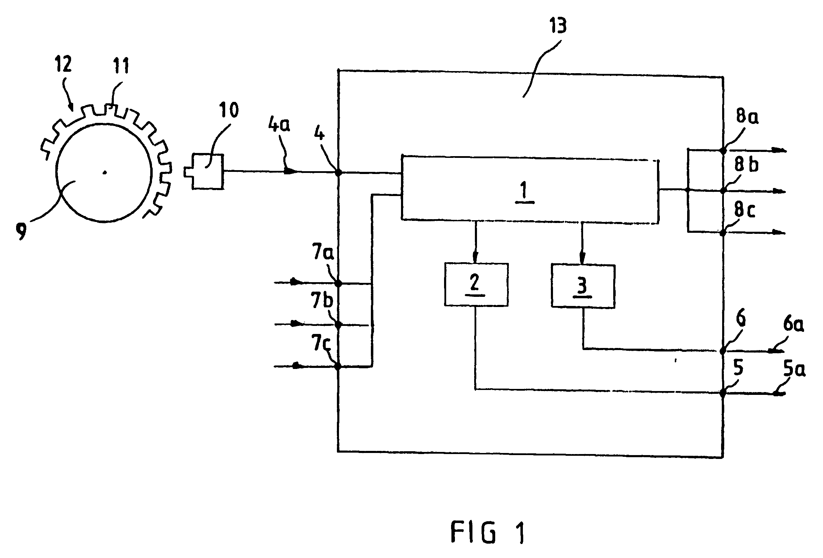

Wie der Fig. 1 entnommen werden kann, weist eine Welle 9 an ihrem Umfang verteilt Winkelmarken 11 auf. Der Bezugspunkt der Winkelmarken 11 ist durch eine Lücke 12 dargestellt, in der eine Winkelmarke 11 fehlt. Ein als Näherungsschalter ausgebildeter Impulsgeber 10 gibt jeweils dann ein Signal ab, wenn an ihm eine Winkelmarke 11 vorbeibewegt wird. Die vom Impulsgeber 10 erzeugten Signale werden an einen ersten Eingang 4 eines Steuergeräts 13 angelegt. Das Steuergerät 13 hat weitere Eingänge 7a, 7b und 7c, an welche Signale entsprechend der Motortemperatur, der Lufttemperatur und dem Zustand der Lambda-Sonde angelegt werden. Die an das Steuergerät 13 angelegten Signale werden einem Mikrocomputer 1 zugeführt. Der Mikrocomputer 1 berechnet aus den Eingangssignalen Drehzahl. Die entsprechenden Signale werden über Ausgänge 8a, 8b und 8c beispielsweise an die Zündung, das Getriebe oder die Einspritzung geliefert.

Das Steuergerät 13 weist des weiteren eine Vorrichtung 2 auf, welche vom Mikrocomputer 1 ein der Drehzahl entsprechendes Signal empfängt. Die Vorrichtung 2 erzeugt in Abhängigkeit des drehzahlabhängigen Signals ein pulsweitenmoduliertes Ausgangssignal und gibt dieses auf einen Ausgang 5 der Steuerung 13.

Des weiteren weist die Steuerung 13 eine Vorrichtung 3 auf, welche vom Mikrocomputer 1 mit dem der Drehzahl entsprechenden Signal versorgt wird. Die Vorrichtung 3 erzeugt in Abhängigkeit des Signals ein frequenzmoduliertes Signal und gibt dieses auf einen Ausgang 6 der Steuerung 13.

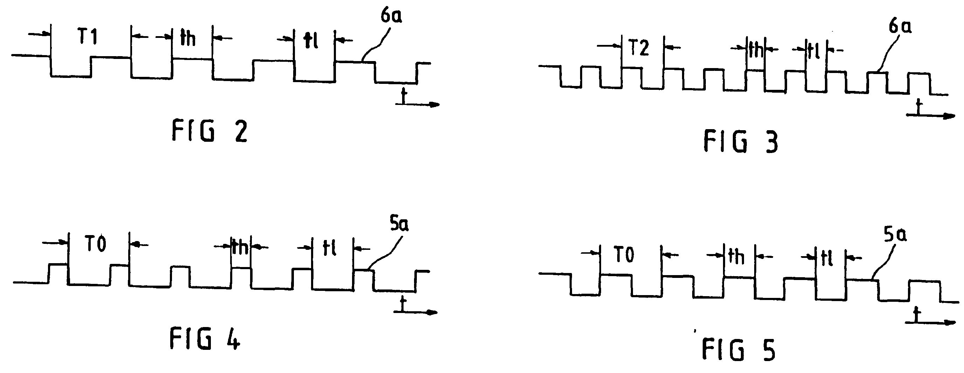

Das am Ausgang 6 der Steuerung 13 ausgegebene drehzahlabhängige frequenzmodulierte Signal ist in den Fig. 2 und 3 dargestellt. Das am Ausgang 5 der Steuerung 13 ausgegebene drehzahlabhängige pulsweitenmodulierte Signal ist in den Fig. 4 und 5 dargestellt.

Wie den Fig. 2 und 3 entnommen werden kann, ist die Ein-Zeit th des am Ausgang 6 der Steuerung 13 ausgegebenen Signals genau so groß wie die Aus-Zeit tl. Die Periodenzeit T1, T2 ist jedoch abhängig von der Drehzahl. Die Periodenzeit T1 des in Fig. 2 dargestellten Signals ist größer als die Periodenzeit T2 des in Fig. 3 dargestellten Signals. Das in Fig. 2 dargestellte Signal entspricht daher einer langsameren Drehzahl als der des in Fig. 3 dargestellten Signals.

Wie den Fig. 4 und 5 entnommen werden kann, ist die Periodenzeit T0 des am Ausgang 5 der Steuerung 13 ausgegebenen Signals in beiden Fig. gleich groß und somit unabhängig von der Drehzahl. Die Ein-Zeit th des in Fig. 4 dargestellten Signals ist kleiner die Ein-Zeit th des in Fig. 5 dargestellten Signals. Das in Fig. 4 dargestellte Signal entspricht daher einer langsameren Drehzahl als der des in Fig. 5 dargestellten Signals.

## Patentansprüche

1. Steuergerät für Verbrennungsmotoren mit einer Welle (9) mit wenigstens einem ersten Eingang (4), an den ein von einem mit der Welle (9) in Verbindung stehenden Impulsgeber (10) erzeugtes erstes Signal (4a) angelegt wird, wobei immer dann ein Signal erzeugt wird wenn sich eine Winkelmarke (11) der Welle (9) an dem Impulsgeber (10) vorbei bewegt, mit einer zentralen Steuereinheit (1), die aus dem ersten Signal (4a) ein der Drehzahl entsprechendes Signal erzeugt, und mit wenigstens einem Ausgang (5, 6), an dem in Abhängigkeit von dem der Drehzahl entsprechenden Signal ein drehzahlabhängiges zweites Signal (5a, 6a) ausgegeben wird, **dadurch gekennzeichnet, dass** die Erzeugung des zweiten Signals (5a, 6a) asynchron ohne direkte Kopplung zum ersten Signal erfolgt und dass das zweite Signal aus einem pulsweitenmodulierten oder frequenzmodulierten Signal besteht.

2. Steuergerät nach Anspruch 1,
**dadurch gekennzeichnet,**
**daß** eine Vorrichtung (2) zur Erzeugung des zweiten Signals (5a) als pulsweitenmoduliertes Signal vorgesehen ist.

3. Steuergerät nach Anspruch 1,
**dadurch gekennzeichnet,**
**daß** eine Vorrichtung (3) zur Erzeugung des zweiten Signals (6a) als frequenzmoduliertes Signal vorgesehen ist.

4. Steuergerät nach einem der Ansprüche 1 bis 3,
**dadurch gekennzeichnet,**
**daß** das zweite Signal (5a, 6a) auch bei fehlendem erstem Signal als ein von Null verschiedenes Signal ausgegeben wird.

5. Steuergerät nach einem der Ansprüche 1 bis 4,
**dadurch gekennzeichnet,**
**daß** die Vorrichtung (2, 3) zur Erzeugung des zweiten Signals (5a, 6a) als separates Modul ausgebildet ist.

## Revendications

1. Appareil de commande pour des moteurs à combustion interne comprenant :
- un arbre (9) avec au moins une première entrée (4) à laquelle est appliqué un premier signal (4a) créé par un générateur d'impulsions (10) relié à l'arbre (9), un signal étant toujours créé lorsqu'une marque de repérage (11) de l'arbre (9) passe devant le générateur d'impulsions (10),
- une unité de commande centrale (1) qui crée un signal correspondant à la vitesse de rotation à partir du premier signal (4a), et
- au moins une sortie (5, 6) par laquelle est émis un second signal (5a, 6a) dépendant de la vitesse de rotation en fonction du signal correspondant à la vitesse de rotation,
**caractérisé en ce que**
la création du second signal (5a, 6a) s'effectue de manière asynchrone sans couplage direct au premier signal, et le second signal est constitué par un signal à modulation d'impulsions en largeur ou à modulation de fréquence.

2. Appareil de commande selon la revendication 1,
**caractérisé en ce qu'**
un dispositif (2) est prévu pour créer le deuxième signal (5a) comme signal à modulation d'impulsions en largeur.

3. Appareil de commande selon la revendication 1,
**caractérisé en ce qu'**
un dispositif (3) est prévu pour créer le deuxième signal (6a) comme signal à modulation de fréquence.

4. Appareil de commande selon l'une des revendications 1 à 3,
**caractérisé en ce que**
le deuxième signal (5a, 6a) est émis, même si le premier signal est absent, comme un signal différent de zéro.

5. Appareil de commande selon l'une des revendications 1 à 4,
**caractérisé en ce que**
le dispositif (2, 3) pour créer le deuxième signal (5a, 6a) est formé comme un module séparé.

## Claims

1. Control device for internal combustion engines having a shaft (9) with at least a first input (4) to which a first signal (4a) which is generated by a pulse transmitter (10) which is connected to the shaft (9) is applied, wherein a signal is generated whenever an angular mark (11) on the shaft (9) moves past the pulse transmitter (10), with a central control unit (1) which generates a signal corresponding to the rotational speed from the first signal (4a), and with at least one output (5, 6) and at which a rotational-speed-dependent, second signal (5a, 6a) is output as a function of the signal which corresponds to the rotational speed, **characterized in that** the second signal (5a, 6a) is generated asynchronously without direct coupling to the first signal, and **in that** the second signal is composed of a pulse-width-modulated or frequency-modulated signal.

2. Control device according to Claim 1, **characterized in that** a device (2) is provided for generating the second signal (5a) as a pulse-width-modulated signal.

3. Control device according to Claim 1, **characterized in that** a device (3) is provided for generating the second signal (6a) as a frequency-modulated signal.

4. Control device according to one of Claims 1 to 3, **characterized in that** the second signal (5a, 6a) is output as a signal which is different from zero even when the first signal is absent.

5. Control device according to one of Claims 1 to 4, **characterized in that** the device (2, 3) is designed to generate the second signal (5a, 6a) as a separate module.
